# EUROPÄISCHE PATENTSCHRIFT

(11) **EP 3 292 933 B1**
(45) Veröffentlichungstag und Bekanntmachung des Hinweises auf die Patenterteilung: **19.01.2022**
(21) Anmeldenummer: 16188583.5
(22) Anmeldetag: 13.09.2016
(51) Int. Cl.: B23D 29/00, B23D 29/02, B23D 33/02

(54) **SCHNEIDVORRICHTUNG**
CUTTING DEVICE
DISPOSITIF DE COUPE

(43) Veröffentlichungstag der Anmeldung: 14.03.2018
(73) Patentinhaber: Schlatter Industries AG, 8952 Schlieren (CH)
(72) Erfinder: SALVISBERG, Beat, 5400 Baden (CH)
(74) Vertreter: Keller Schneider Patent- und Markenanwälte AG (Bern)

(56) Entgegenhaltungen:
- CH-A- 102 802
- US-A- 4 228 585
- US-A- 5 988 027
- None

## Beschreibung

### Technisches Gebiet

Die Erfindung betrifft eine Schneidvorrichtung zum Schneiden von Draht, gemäß dem Oberbegriff des Anspruchs 1. Eine solche Schneidvorrichtung ist aus dem Dokument CH 102 802 A bekannt. Z

### Stand der Technik

Zum maschinellen Herstellen von Gitter aus Drähten werden üblicherweise Gitterschweissmaschinen eingesetzt. Solche Gitterschweissmaschinen verschweissen Längsdrähte punktuell mit Querdrähten zu einem Gitter. Die Gitterschweissmaschine weist üblicherweise eine Längsdraht- und eine Querdraht-Zuführung auf. Dabei umfasst die Längs- und/oder Querdraht-Zuführung eine Schneidvorrichtung zum Schneiden des Längsdrahts bzw. des Querdrahts. Der abzuschneidende Draht wird in einer Schnittbüchse der Längsdraht- oder der Querdraht-Zuführung vor das Messer geführt, so dass der Draht beim Schneiden stabil geführt ist. Dadurch kann ein sauberer und exakter Schnitt erzielt werden.

Damit der Draht stabil in der Schnittbüchse geführt werden kann, muss die Führung der Schnittbüchse an den Drahtdurchmesser des zu verarbeitenden Drahts angepasst sein. Wird ein Draht durch eine Führung geführt, die wesentlich grösser ist als der Durchmesser des Drahts, kann sich der Draht beim Abschneiden innerhalb der Öffnung zu stark bewegen. Das hat zur Folge, dass der Draht nicht präzise geschnitten wird und dass keine saubere Schnittfläche erzielt werden kann. Daher werden für unterschiedliche Drahtdurchmesser unterschiedliche Schnittbüchsen verwendet.

Je nach zu verarbeitenden Drahtdurchmesser muss die Schnittbüchse manuell von Hand ausgetauscht werden, um die Führung des Drahts an den momentan verwendeten Drahtdurchmesser anzupassen. Das bedingt den Einsatz eines Monteurs und benötigt viel Zeit.

Eine andere Möglichkeit offenbart die EP 1 123 174 B1 (EVG). Diese zeigt eine Schneideinrichtung zum Abschneiden von Quer- und Längsdrähten für eine Drahtgittermatten-Schweissmaschine. Mit der offenbarten Schneideinrichtung können von mehreren gleichzeitig zugeführten Materialsträngen Drähte abgetrennt werden. Für jeden Materialstrang ist zumindest eine stationär angeordnete Schneideinrichtung vorhanden. Der Messerhub kann zudem in Abhängigkeit von der Materialstärke des zu durchtrennenden Materialstrangs gewählt werden. Jede Schneideinrichtung ist dabei einzeln ansteuerbar.

Diese Schneideinrichtung hat den Nachteil, dass für jeden Materialstrang eine eigene Schneidvorrichtung benötigt wird. Das macht die Schneideinrichtung teuer und benötigt viel Platz.

### Darstellung der Erfindung

Aufgabe der Erfindung ist es, eine kompakte Schneidvorrichtung zu schaffen, mit welcher Drähte mit unterschiedlichen Durchmessern effizient und sauber geschnitten werden können.

Die Lösung der Aufgabe ist durch die Merkmale des Anspruchs 1 definiert. Gemäss der Erfindung weist die Schneidvorrichtung einen Verstellmechanismus zum Verstellen der Schnittbüchse auf, um wahlweise die erste Öffnung oder die zweite Öffnung der Schnittbüchse in die Bearbeitungsposition zu bringen.

Durch den Verstellmechanismus kann die Schneidvorrichtung auf einfache Art und Weise von einem ersten Draht mit einem ersten Drahtdurchmesser zu einem zweiten Draht mit einem zweiten, vom ersten unterschiedlichen Drahtdurchmesser umgerüstet werden. Dies spart Zeit beim Wechsel und ermöglicht somit eine effiziente Produktion. Da der Draht immer in einer Führung geführt wird, die an den Drahtdurchmesser angepasst ist, wird ein sauberer Schnitt ermöglicht. Der Verstellmechanismus mit der verstellbaren Schnittbüchse erlaubt zudem eine kompakte Bauweise der Schneidvorrichtung. Es wird für alle Drahtdurchmesser grundsätzlich nur ein Messer benötigt.

Die Öffnung zum Führen des Drahts in der Schnittbüchse kann eine beliebige Form aufweisen. Beispielsweise kann die Öffnung als Bohrung ausgeführt sein. In diesem Fall weist die Öffnung einen kreisrunden Querschnitt auf und das Innenmass der Öffnung entspricht dem Innendurchmesser der Bohrung. Genauso gut kann die Öffnung beispielsweise einen rechteckigen oder einen mehreckigen Querschnitt aufweisen. In diesem Fall entspricht das Innenmass dem kleinsten Mass zwischen zwei einander gegenüberliegenden Innenwänden der Öffnung.

Befindet sich ein Draht in einer Öffnung, welche sich in der Bearbeitungsposition befindet, kann dieser Draht vom Messer abgeschnitten werden.. Der Verstellmechanismus, um die erste oder die zweite Öffnung in die Bearbeitungsposition zu bringen, kann unterschiedlich ausgeführt sein. Beispielsweise kann die Schnittbüchse verschoben oder gedreht werden oder durch eine Kombination einer Verschiebung und einer Drehung bewegt werden. Die Schnittbüchse kann zudem unterschiedliche Formen aufweisen. Sie kann zylinderförmig, quaderförmig oder kugelförmig ausgebildet sein.

Vorzugsweise umfasst die Schnittbüchse eine dritte Öffnung, welche ein zum ersten und zum zweiten Innenmass unterschiedliches drittes Innenmass aufweist. Dadurch können drei Drähte mit drei unterschiedlichen Durchmessern alternativ in der Schnittbüchse geführt werden. Das ermöglicht einen vielseitigen Einsatz der Schneidvorrichtung.

Alternativ dazu besteht auch die Möglichkeit, dass die Schnittbüchse nur zwei Öffnungen oder mehr als drei Öffnungen aufweist.

In einer ersten Ausführungsform ist die erste Schnittbüchse um eine parallel zur ersten und zweiten Öffnung ausgerichtete Rotationsachse schwenkbar, um die erste oder zweite Öffnung der Schnittbüchse in die Bearbeitungsposition zu schwenken. Dadurch kann die erste oder die zweite Öffnung einfach und präzise in die Bearbeitungsposition gebracht werden und die Verstellvorrichtung ist besonders kompakt konstruierbar.

Vorzugsweise ist die Schnittbüchse als Zylinder ausgebildet, und die Öffnungen sind als parallel zu einer Längsachse des Zylinders verlaufende Bohrungen ausgeführt. Das erlaubt eine einfache und kostengünstige Herstellung der Schnittbüchse mit den Öffnungen. Mit Vorteil sind alle Zentren der Bohrungen im selben radialen Abstand von der Längsachse des Zylinders angeordnet. Zudem verläuft bevorzugt die Längsachse des Zylinders konzentrisch zur Rotationsachse der Schnittbüchse. Dadurch können die Öffnungen für die Drähte platzsparend angeordnet werden.

Alternativ dazu kann die Schnittbüchse auch eine andere Form aufweisen. So kann sie beispielsweise auch quaderförmig ausgebildet sein.

In weiteren Ausführungsformen weist die Schnittbüchse keine Rotationsachse auf, oder die Rotationsachse steht in einem Winkel zur ersten oder zur zweiten Öffnung.

So ist in einer zweiten Ausführungsform die Schnittbüchse entlang einer linearen Achse verschiebbar, um die erste oder zweite Öffnung der Schnittbüchse in die Bearbeitungsposition zu verschieben. In diesem Fall sind die Öffnungen in der Schnittbüchse vorzugsweise nebeneinander angeordnet. Die Schnittbüchse ist dadurch länglich und weist eine geringe Höhe auf, was eine besonders flache Bauweise der Schneidvorrichtung ermöglicht. Die lineare Achse verläuft insbesondere senkrecht zur Drahtzuführrichtung.

Im Rahmen einer Ausführungsform mit schwenkbarer Schnittbüchse umfasst der Verstellmechanismus mit Vorteil einen Antrieb, der einen Elektromotor beinhaltet. Die Schnittbüchse ist dabei durch den Elektromotor stufenlos um die Rotationsachse schwenkbar. Der stufenlose Antrieb ermöglicht eine schnelle und präzise Positionierung der Öffnungen in die Bearbeitungsposition. Dadurch kann der Wechsel von einem Drahtdurchmesser zu einem anderen Drahtdurchmesser automatisiert und besonders effizient erfolgen. Beim Elektromotor kann es sich um einen Gleichstrommotor oder um einen Drehstrommotor handeln. Vorzugsweise handelt es sich beim Elektromotor um einen Gleichstrommotor und um einen Servomotor.

Alternativ dazu kann der Verstellmechanismus auch manuell von Hand verstellbar ausgeführt sein.

Vorzugsweise umfasst der Antrieb eine vom Elektromotor angetriebene Schnecke und ein Schneckenrad, wobei das Schneckenrad mit der Schnittbüchse zusammenwirkt, so dass die erste oder die zweite Öffnung der Schnittbüchse über die Schnecke und das Schneckenrad in die Bearbeitungsposition schwenkbar ist.

Die Schnecke ist vorzugsweise zylinderförmig ausgebildet und weist eine schraubenförmige Verzahnung auf. Das Schneckenrad umfasst bevorzugt radial von der Längsachse der Schnittbüchse abstehende Zahnflanken, die in die schraubenförmige Verzahnung der Schnecke eingreifen. Schnecke und Schneckenrad bilden dadurch ein Schneckengetriebe, welches eine hohe Übersetzung erlaubt. Dadurch kann die üblicherweise hohe Nenndrehzahl des Elektromotors auf eine niedrigere für die Schnittbüchse geeignete Drehzahl übersetzt werden. In einer Variante dazu besteht die Möglichkeit, dass zwischen der Schnecke und dem Schneckenrad noch weitere Zahnräder angeordnet sind. Dadurch kann eine noch höhere Übersetzung erzielt werden.

Vorzugsweise ist das Schneckenrad ein separates Element, das mit der Schnittbüchse lösbar verbunden ist. Dadurch kann bei Bedarf die Schnittbüchse oder das Schneckenrad separat ausgetauscht werden. Das vereinfacht den Unterhalt. Zudem kann dadurch das Schneckenrad in axialer Richtung der Schnittbüchse verstellt werden, beispielsweise mit Distanzschieben. Das erlaubt eine einfache Positionierung der Schnittbüchse. Bevorzugt ist das Schneckenrad innerhalb der Schnittbüchse angeordnet, so dass die Schnittbüchse konzentrisch zum Schneckenrad angeordnet ist und die Rotationsachse der Schnittbüchse der Rotationsachse des Schneckenrads entspricht.

Alternativ dazu kann die Schnittbüchse nicht als einzelnes Bauteil, sondern als integriertes Element an der Aussenseite der Schnittbüchse ausgebildet sein.

Bevorzugt umfasst der Antrieb weiter einen Zahnriemen, zum Übertragen von Kräften vom Elektromotor auf die Schnecke. Der Zahnriemen ermöglicht einen geräuscharmen und schlupffreien Antrieb. Des Weiteren benötigt der Zahnriemen keine Schmierung. Zudem hat ein Zahnriemen eine hohe Lebensdauer, eine geringe Masse und ist kostengünstig erhältlich.

Alternativ dazu können die Antriebskräfte vom Motor beispielsweise auch mit einem Keilriemen, mit einer Kette oder mit Zahnrädern auf die Schnittbüchse übertragen werden.

In anderen Ausführungsformen umfasst der Antrieb keine Schnecke und kein Schneckenrad. Der Motor kann in diesem Fall beispielsweise direkt mit der Schnittbüchse zusammenwirken oder der Antrieb kann beispielsweise Stirnzahnräder umfassen.

Mit Vorteil ist das Messer zum Schneiden des Drahts entlang eines Verstellwegs bewegbar, wobei der Verstellweg in eine erste und in eine zweite Richtung begrenzt ist. Dadurch kann der Draht schnell und sicher abgeschnitten werden. Die Begrenzung verhindert, dass sich das Messer zu weit in eine Richtung bewegt und dadurch Schaden anrichten kann. Zudem kann über die Begrenzung die Länge des Verstellwegs eingestellt werden, um zu verhindern, dass sich das Messer unnötig weit bewegt. Dadurch kann der Schneidvorgang effizient ausgeführt werden. Der Verstellweg des Messers kann dabei geradlinig oder gekrümmt oder eine Kombination aus einer geradlinigen und gekrümmten Bewegung sein. Bevorzugt ist der Verstellweg des Messers gradlinig. Das ermöglicht ein rasches und sicheres Abscheren des Drahts. Besonders bevorzugt ist mindestens eine der Begrenzungen verstellbar, um unterschiedlichen Drahtdurchmessern Rechnung zu tragen. Der Verstellweg kann so dem abzuscherenden Draht optimal angepasst werden.

Eine Draht-Zuführeinrichtung für eine Gitterschweissanlage umfasst mindestens eine Schneidvorrichtung gemäss obiger Beschreibung.

Die Schneidvorrichtung kann jedoch auch für andere Maschinen, beispielsweise für eine Lötmaschine, für eine Drahtbiegemaschine oder sonstige drahtverarbeitende Maschinen eingesetzt werden.

Vorzugsweise umfasst die Schneidvorrichtung eine zweite Schnittbüchse, zum Führen eines zweiten abzuschneidenden Drahts. Dadurch können zwei Drähte gleichzeitig der Maschine zugeführt und abschnitten werden, was eine besonders effiziente Verarbeitung der Drähte ermöglicht. Namentlich können beispielsweise Querdrähte auf einfache Weise oberhalb und unterhalb der Ebene der Längsdrähte zugeführt werden, z. B. um abwechselnd Gittermatten mit oben und unten angeordneten Querdrähten herstellen zu können. Zudem können mit zwei Schnittbüchsen gleichzeitig zwei Drähte mit unterschiedlichem Durchmesser mit der Maschine verarbeitet werden. Die Schnittbüchsen können dabei bezogen auf die drahtverarbeitende Maschine horizontal, vertikal oder in eine beliebige Richtung versetzt zueinander angeordnet sein. Vorzugsweise ist jeder Schnittbüchse ein bewegliches Messer zum Schneiden des Drahts zugeordnet.

Die Schneidvorrichtung kann mehr als zwei Schnittbüchsen aufweisen, um beispielsweise mehr als zwei Drähte unterschiedlichen Durchmessers gleichzeitig verarbeiten zu können.

Bevorzugt wirken die beiden Schnittbüchsen je mit einem Schneckenrad zusammen. Dadurch können beide Schnittbüchsen auf einfache Art und Weise mit einer Schnecke oder mit zwei Schnecken angetrieben werden.

Alternativ dazu besteht auch die Möglichkeit, dass nur eine Schnittbüchse mit einem Schneckenrad zusammenwirkt.

Mit Vorteil umfasst die Draht-Zuführeinrichtung eine Schnecke, die derart ausgebildet ist, dass die Schnecke die beiden Schnittbüchsen über die jeweiligen Schneckenräder antreiben kann. Dadurch ist ein einfacher und platzsparender Antrieb der Schnittbüchsen ermöglicht, da der Antrieb nur eine Schnecke umfasst.

Bevorzugt umfasst die Schnecke einen ersten und einen zweiten Teil, wobei der erste Teil mit einem ersten der Schneckenräder und der zweite Teil mit einem zweiten der Schneckenräder zusammenwirkt und für die Montage der erste Teil relativ zum zweiten Teil verdrehbar ist. Das vereinfacht die Montage. Eine einteilige Schnecke würde nämlich bedingen, dass beide Schneckenräder zueinander ausgerichtet werden müssten, um die Öffnungen beider Schnittbüchsen relativ zueinander auszurichten und gleichzeitig die Schneckenräder auch zur Schnecke ausgerichtet werden müssten, damit die Schneckenräder mit der Schnecke zusammenwirken können. Das würde zudem exakt gleiche Schneckenräder erfordern, was die Produktion erheblich verteuern würde. Mit einer Schnecke mit einem ersten und einem zweiten Teil kann zuerst das erste Schneckenrad positioniert und zur Schnecke ausgerichtet werden. Anschliessend kann das zweite Schneckenrad relativ zum ersten Schneckenrad positioniert und zur Schnecke ausgerichtet werden. Das vereinfacht die Montage erheblich.

Vorzugsweise wird nach der Montage der erste Teil und der zweite Teil der Schnecke fixiert, so dass der erste Teil nicht mehr relativ zum zweiten Teil verdrehbar ist.

Alternativ dazu kann die Draht-Zuführeinrichtung auch zwei Schnecken umfassen, wobei die Schnecken derart ausgebildet sind, das sie je eine Schnittbüchse antreiben.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine perspektivische Ansicht einer Vorderseite einer erfindungsgemässen Schneidvorrichtung für eine Querdraht-Zuführung,
- Fig. 2: eine Ansicht einer Rückseite der Schneidvorrichtung aus Figur 1,
- Fig. 3: eine perspektivische Ansicht der Rückseite der Schneidvorrichtung, wobei einige äussere Teile nicht dargestellt sind, so dass der Antrieb der erfindungsgemässen Schneidvorrichtung ersichtlich ist, und
- Fig. 4: eine Schnittansicht durch den Sockel der Schneidvorrichtung, wobei die Schnittebene entlang der Längsachse der Schnecke verläuft und rechtwinklig zur Längsachse des Arms der Schneidvorrichtung ausgerichtet ist.

Grundsätzlich sind in den Figuren gleiche Teile mit gleichen Bezugszeichen versehen.

### Wege zur Ausführung der Erfindung

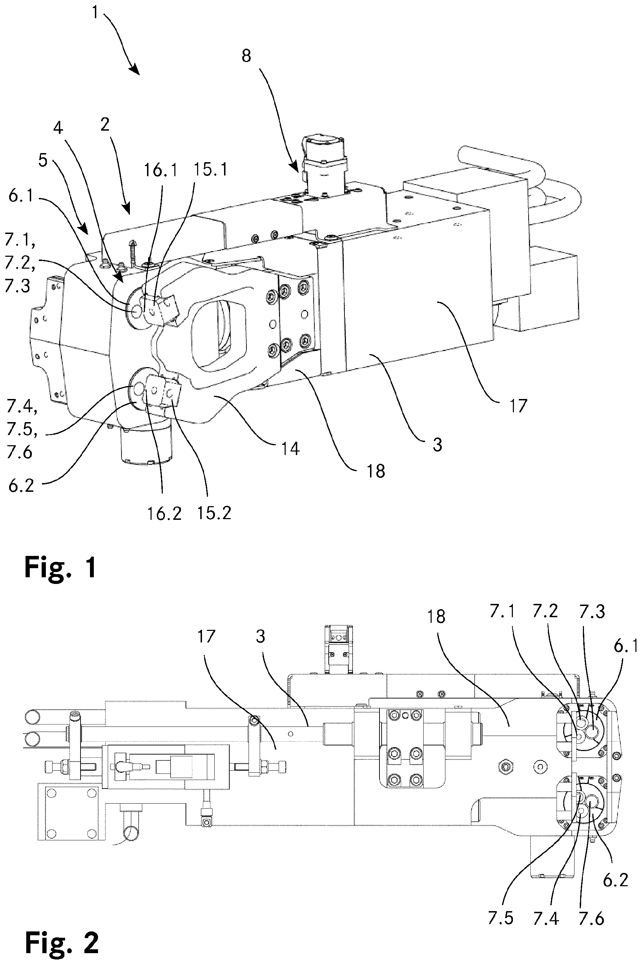

Maschinell hergestellte Gitter aus Draht werden üblicherweise aus Längsdrähten und Querdrähten gebildet. Eine Maschine zur Herstellung eines solchen Gitters umfasst eine Schweissanlage, eine Längsdraht-Zuführeinrichtung zum Zuführen der Längsdrähte zur Schweissanlage und eine Querdraht-Zuführeinrichtung zum Zuführen der Querdrähte zur Schweissanlage. Figur 1 zeigt eine perspektivische Ansicht einer erfindungsgemässen Schneidvorrichtung 1 einer solchen Querdraht-Zuführeinrichtung.

Die in Figur 1 gezeigte Schneidvorrichtung 1 ist als horizontal ausgerichteter Arm 3 ausgebildet. Der Arm 3 umfasst im vorderen freien Bereich einen Sockel 18 und im hinteren Bereich eine Hubsteuereinheit 17, welche einen Hydraulikzylinder und Steuerelemente beinhaltet. An einem vorderen freien Ende des Sockels 18 befindet sich eine Schneideinheit 2. Der gesamte Arm 3 kann in verschiedenen Ausrichtungen an der Maschine angebracht sein. Die vorliegende Beschreibung bezieht sich auf einen horizontal ausgerichteten Arm 3. Dabei beziehen sich die Angaben "oben" und "unten" auf den horizontal ausgerichteten Arm 3. Die Schneideinheit 2 umfasst einen Schneidmechanismus 4 und einen Verstellmechanismus 5. Der Schneidmechanismus 4 dient zum Schneiden des zugeführten Querdrahts, während der Verstellmechanismus 5 den Wechsel von zugeführten Querdrähten mit unterschiedlichen Durchmessern zum Schneidmechanismus 4 ermöglicht.

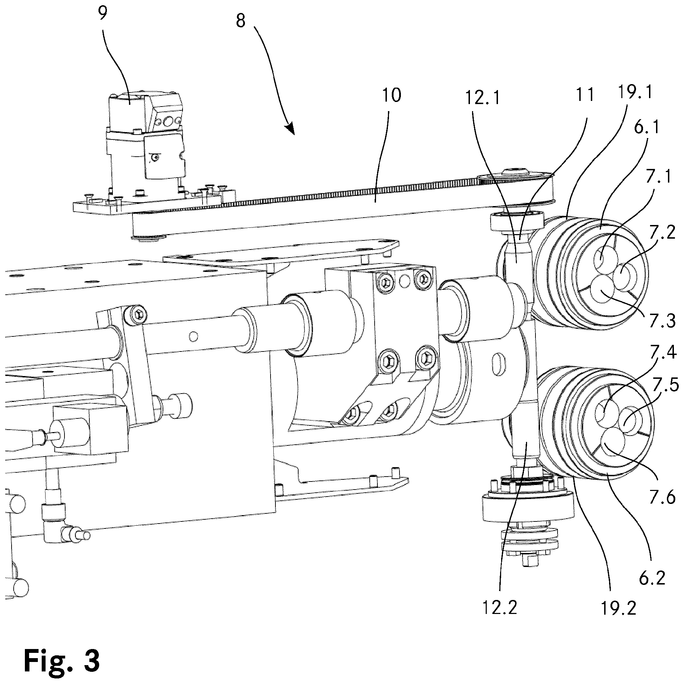

Der Verstellmechanismus 5 umfasst dabei zwei Schnittbüchsen 6.1, 6.2, die je drei Öffnungen in der Form von Bohrungen 7.1 - 7.6 aufweisen (vgl. auch Figur 3) und einen Antrieb 8 für die Schnittbüchsen 6.1, 6.2. Die Schnittbüchsen 6.1, 6.2 sind am vorderen freien Ende des Sockels 18 vertikal übereinander angeordnet und sind je in der Form eines Zylinders mit einer Zylinderlängsachse ausgebildet. Dabei sind beide Schnittbüchsen 6.1, 6.2 jeweils um eine Rotationsachse, die konzentrisch zur Zylinderlängsachse verläuft, drehbar im Sockel 18 gelagert, wobei die Zylinderlängsachse horizontal ausgerichtet ist und rechtwinklig zur Längsachse des gesamten Arms 3 steht.

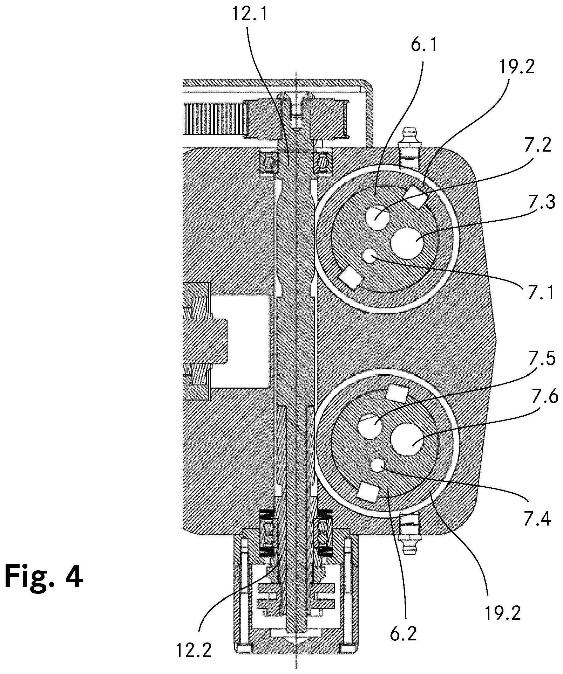

Über einen Teilbereich der axialen Länge der Schnittbüchsen 6.1, 6.2 erstreckt sich je ein Schneckenrad 19.1, 19.2, ersichtlich in Figur 4. Dabei sind die Schneckenräder 19.1, 19.2 je in der Form einer Hülse ausgebildet. Auf der Innenseite der Hülse umfassen die Schneckenräder 19.1, 19.2 jeweils zwei sich gegenüberliegende Nuten für Keile. Die Schnittbüchsen 6.1, 6.2 umfassen je ebenfalls zwei Nuten für die Keile. Über die zwei Keilverbindungen sind die Schnittbüchsen 6.1, 6.2 je mit den Schneckenrädern 19.1, 19.2 verbunden, so dass ein Drehmoment vom Schneckenrad 19.1, 19.2 auf die Schnittbüchsen 6.1, 6.2 übertragbar ist. Die Schneckenräder 19.1, 19.2 sind konzentrisch zu den Schnittbüchsen 6.1, 6.2 angeordnet und können jeweils über Distanzscheiben in axialer Richtung relativ zu den Schneckenrädern 19.1, 19.2 positioniert werden. Auf der Aussenseite weisen die Schneckenräder 19.1, 19.2 je nach aussen abstehende Zahnflanken auf.,. Auf der Stirnseite der Zylinder der Schnittbüchsen 6.1, 6.2 befinden sich jeweils die drei Öffnungen der Schnittbüchsen 6.1, 6.2, die jeweils als Bohrungen 7.1 - 7.6 ausgebildet sind und parallel zur Zylinderlängsachse durch die Schnittbüchse 6.1, 6.2 hindurchführen. Die Zentren der drei Bohrungen 7.1 - 7.6 einer Schnittbüchse 6.1, 6.2 liegen auf einem gedachten Kreis, welcher konzentrisch zur Rotationsachse platziert ist. Die Bohrungen 7.1 - 7.6 weisen dabei ein Innenmass auf, welches dem Innendurchmesser der Bohrungen 7.1 - 7.6 entspricht, wobei alle drei Bohrungen 7.1 - 7.6 einer Schnittbüchse 6.1, 6.2 unterschiedliche Innendurchmesser aufweisen, ersichtlich in den Figuren 2 und 3.

Figur 2 zeigt eine Seitenansicht des Arms 3 von einer der Vorderseite gegenüberliegenden Rückseite des Arms 3. Durch die drei Bohrungen 7.1 - 7.6 mit unterschiedlichen Durchmessern können in einer Schnittbüchse 6.1, 6.2 drei Drähte mit unterschiedlichen Durchmessern geführt werden. Vorzugsweise können in der Bohrung 7.1 - 7.6 mit dem kleinsten Durchmesser Drähte mit einem Durchmesser von 5 mm und 6 mm geführt werden. In der Bohrung 7.1 - 7.6 mit dem mittleren Durchmesser sind Drähte mit einem Durchmesser von 7, 8, 9 und 10 mm zum Schneidmechanismus 4 zuführbar, und die Bohrung 7.1 - 7.6 mit dem grössten Durchmesser eignet sich für Drähte mit 11, 12 und 13 mm Durchmesser.

In Figur 3 ist der Antrieb 8 des Verstellmechanismus 5 ersichtlich. In der perspektivischen Darstellung von Figur 3 ist wie in Figur 2 die Rückseite des Arms 3 gezeigt, wobei Teile des Arms 3, insbesondere Bestandteile des Sockels 18 mit Lagerstellen der Schnittbüchsen 6.1, 6.2, nicht dargestellt sind. Dadurch sind die Elemente des Antriebs 8 besser erkennbar. Der Antrieb 8 des Verstellmechanismus 5 umfasst einen Elektromotor in der Form eines Servomotors 9, einen Zahnriemen 10 und eine Schnecke 11. Der Servomotor 9 ist an einer Oberseite der Hubsteuereinheit 17 angeordnet und treibt den Zahnriemen 10 an, welcher entlang der Längsachse des Arms 3 von der Hubsteuereinheit 17 horizontal nach vorne zum freien Ende des Sockels 18 zu den Schnittbüchsen 6.1, 6.2 ausgerichtet ist. Der Zahnriemen 10 treibt die vertikal und, bezüglich der Breite des Sockels 18, mittig ausgerichtete Schnecke 11 an. An ihrem oberen und an ihrem unteren Ende ist die Schnecke 1141 drehbar am Sockel 18 gelagert, ersichtlich in Figur 4. Zudem umfasst die Schnecke 11 einen ersten oberen Teil 12.1 und einen zweiten unteren Teil 12.2, wobei der erste obere Teil 12.1 mit dem oberen Schneckenrad 19.1 der oberen Schnittbüchse 6.1 und der zweite untere Teil 12.2 mit dem unteren Schneckenrad 19.2 der unteren Schnittbüchse 6.2 zusammenwirkt. Dadurch können die beiden Schnittbüchsen 6.1, 6.2 über eine einzige Schnecke 11 angetrieben werden. Die Schnecke 11 und die Schneckenräder 19.1, 19.2 der Schnittbüchsen 6.1, 6.2 bilden somit ein Schneckengetriebe, welches eine hohe Übersetzung erlaubt.

Der Schneidmechanismus 4 der Schneideinheit 2 ist in Figur 1 ersichtlich und umfasst einen Messerträger 14 und zwei Messer 15.1, 15.2. Der Messerträger 14 ist seitlich an der Vorderseite des Arms 3 angeordnet. Er weist eine längliche Form auf und ist entlang der Längsachse des Arms 3 ausgerichtet, wobei der Messerträger 14 an seinem hinteren Ende am Sockel 18 verschiebbar gelagert ist und an seinem vorderen freien Ende die zwei Messer 15.1, 15.2 trägt. Der Messerträger 14 ist relativ zum Sockel 18 in Richtung der Längsachse des Arms 3 horizontal und gradlinig verschiebbar. Dadurch ist der Messerträger 14 rechtwinklig zur Rotationsachse und damit rechtwinklig zu den Bohrungen der Schnittbüchsen 6.1, 6.2 bewegbar.

Wie in Figur 1 ersichtlich ist, weist der Messerträger 14 eine obere und eine untere Messeraufnahme auf, in der je ein Messer 15.1, 15.2 gehalten ist. Die Messer 15.1, 15.2 haben eine quadratische Form, wobei bei jedem Messer 15.1, 15.2 jeweils eine zu den Bohrungen 7.1 - 7.6 der Schnittbüchsen 6.1, 6.2 weisende Kante als Schneidkante 16.1 16.2 ausgebildet ist. Die Schneidkanten 16.1, 16.2 der Messer 15.1, 15.2 sind je in einem spitzen Winkel zur Vertikalen ausgerichtet, ersichtlich in Figur 1. Dabei ist der Messerträger 14 in Bezug auf die Längsachse des Arms 3 symmetrisch ausgebildet, so dass die Schneidkante 16.1 des oberen Messers 15.1 von vorne oben, das heisst in Richtung vom oberen vorderen freien Ende des Arms, nach hinten unten weist und die Schneidkante 16.2 des unteren Messers 16.2 von vorne unten nach hinten oben weist.

Wie erwähnt, sind die Schnittbüchsen 6.1, 6.2 je drehbar im Sockel 18 des Arms 3 gelagert. Beide Schnittbüchsen 6.1, 6.2 weisen je eine Bearbeitungsposition auf, in welcher sich jeweils eine Bohrung 7.1 - 7.6 der Schnittbüchsen 6.1, 6.2 in der Bearbeitungsposition direkt vor je einer Schneidkante 16.1, 16.2 des jeweiligen Messers 15.1, 15.2 befindet. Ein durch diese Bohrung 7.1 - 7.6 geführter Draht, welcher auf der Vorderseite des Arms 3 aus der Bohrung 7.1 - 7.6 herausragt, ist durch die Schneidkante 16.1, 16.2 des Messers 15.1, 15.2 abscherbar. Das Abscheren geschieht, indem der Messerträger 14 mit den Messern 15.1, 15.2 relativ zum Arm 3 horizontal nach vorne zum freien Ende des Arms 3 hin verschoben wird. Ist der Draht abgeschert, wird der Messerträger 14 wieder nach hinten zurückgezogen. Der Verstellweg, entlang dem der Messerträger 14 mit den Messern 15.1, 15.2 verschiebbar ist, kann dabei in beide Richtungen begrenzt und an den Querschnitt des abzuscherenden Drahts angepasst werden.

Um einen Querdraht mit einem anderen Durchmesser abzuscheren, wird der Servomotor 9 betätigt, der über den Zahnriemen 10 und das Schneckengetriebe die Schnittbüchsen 6.1, 6.2 dreht, bis sich die gewünschte Bohrung 7.1 - 7.6 in der Bearbeitungsposition befindet.

Um die Montage der Schnecke 11 zu vereinfachen, wird die Schnecke 11 so hergestellt, dass der obere Teil 12.1 der Schnecke relativ zum zweiten Teil der Schnecke 12.2 verdrehbar ist. Dadurch kann bei der Montage der Schneckenräder 6.1, 6.2 beispielsweise zuerst das obere Schneckenrad der oberen Schnittbüchse 6.1 montiert und anschliessend das zweite Schneckenrad der unteren Schnittbüchse 6.2 montiert werden. Der obere Teil 12.1 und der untere Teil 12.2 sind am besten in Figur 4 ersichtlich. Da der obere Teil 12.1 relativ zum unteren Teil 12.2 der Schnecke 11 bewegbar ist, können nun die Bohrungen 7.1, 7.2, 7.3 der oberen Schnittbüchse 6.1 relativ zu den Bohrungen 7.4, 7.5, 7.6 der unteren Schnittbüchse 6.2 ausgerichtet werden. Nach dieser Ausrichtung wird der obere Teil 12.1 und der untere Teil 12.2 der Schnecke mit der Schnecke 11 verpresst, so dass der obere und der untere Teil 12.1, 12.2 nicht mehr relativ zueinander bewegbar sind.

Die Erfindung ist nicht auf das beschriebene Ausführungsbeispiel beschränkt. So kann beispielsweise die Schneideinheit nicht an einem Arm angeordnet sondern an einer anderen Vorrichtung befestigt sein. Auch kann der Verstellmechanismus mit einem anderen als mit dem beschriebenen Schneidmechanismus verwendet werden. So muss der Schneidmechanismus nicht zwingend einen Messerträger und zwei Messer aufweisen, sondern kann beispielsweise nur ein Messer umfassen, welches für beide Schnittbüchsen einsetzbar ist. Zudem muss die Schneideinheit auch nicht zwei Schnittbüchsen aufweisen, sondern kann nur eine oder mehr als zwei Schnittbüchsen umfassen. Die Schnittbüchsen müssen nicht zwingend als Zylinder ausgeführt sein und können zudem anstelle drehbar auch verschiebbar in einer Lagerung gehalten sein.

Zusammenfassend ist festzustellen, dass eine kompakte Schneidvorrichtung geschaffen wurde, mit welcher Draht mit unterschiedlichen Durchmessern effizient und sauber geschnitten werden kann.

## Patentansprüche

1. Schneidvorrichtung (2) für eine drahtverarbeitende Maschine zum Schneiden von Draht, umfassend ein bewegliches Messer (15.1) zum Schneiden des Drahts, eine Schnittbüchse (6.1) mit einer ersten Öffnung (7.1) zum Führen des abzuschneidenden Drahts, wobei die erste Öffnung ein erstes Innenmass aufweist, und einer zweiten Öffnung, welche ein zum ersten Innenmass unterschiedliches zweites Innenmass aufweist, wobei sich die erste oder die zweite Öffnung in einer Bearbeitungsposition befinden kann, in welcher der Draht durch das Messer (15.1) abscherbar ist, **dadurch gekennzeichnet, dass** die Schneidvorrichtung (2) einen Verstellmechanismus (5) zum Verstellen der Schnittbüchse (6.1) aufweist, um wahlweise die erste Öffnung oder die zweite Öffnung der Schnittbüchse (6.1) in die Bearbeitungsposition zu bringen.

2. Schneidvorrichtung (2) nach Anspruch 1, **dadurch gekennzeichnet, dass** die Schnittbüchse (6.1) eine dritte Öffnung umfasst, welche ein zum ersten und zum zweiten Innenmass unterschiedliches drittes Innenmass aufweist.

3. Schneidvorrichtung (2) nach Anspruch 1 oder 2, **dadurch gekennzeichnet, dass** die Schnittbüchse (6.1) um eine parallel zur ersten und zweiten Öffnung ausgerichtete Rotationsachse schwenkbar ist, um die erste oderzweite Öffnung der Schnittbüchse (6.1) in die Bearbeitungsposition zu schwenken.

4. Schneidvorrichtung (2) nach Anspruch 3, **dadurch gekennzeichnet, dass** die Schnittbüchse (6.1) als Zylinder ausgebildet ist und die Öffnungen als parallel zu einer Längsachse des Zylinders verlaufende Bohrungen (7.1, 7.2, 7.3) ausgeführt sind.

5. Schneidvorrichtung (2) nach Anspruch 1 oder 2, **dadurch gekennzeichnet, dass** die Schnittbüchse (6.1) entlang einer linearen Achse verschiebbar ist, um die erste oder zweite Öffnung der Schnittbüchse (6.1) in die Bearbeitungsposition zu verschieben.

6. Schneidvorrichtung (2) nach Anspruch 3 oder 4, **dadurch gekennzeichnet, dass** der Verstellmechanismus (5) einen Antrieb (8) umfasst, der einen Elektromotor beinhaltet, wobei die Schnittbüchse (6.1) durch den Elektromotor stufenlos um die Rotationsachse schwenkbar ist.

7. Schneidvorrichtung (2) nach Anspruch 6, **dadurch gekennzeichnet, dass** der Antrieb (8) eine vom Elektromotor angetriebene Schnecke (11) und ein Schneckenrad (19.1) umfasst, wobei das Schneckenrad (19.1) mit der Schnittbüchse (6.1) zusammenwirkt, so dass die erste oder die zweite Öffnung der Schnittbüchse (6.1) über die Schnecke (11) und das Schneckenrad (19.1) in die Bearbeitungsposition schwenkbar ist.

8. Schneidvorrichtung (2) nach Anspruch 7, **dadurch gekennzeichnet, dass** der Antrieb (8) weiter einen Zahnriemen (10) umfasst, zum Übertragen von Kräften vom Elektromotor auf die Schnecke (11).

9. Schneidvorrichtung (2) nach einem der Ansprüche 1 bis 8, **dadurch gekennzeichnet, dass** das Messer (15.1) zum Schneiden des Drahts entlang eines Verstellwegs bewegbar ist, wobei der Verstellweg in eine erste und in eine zweite Richtung begrenzt ist.

10. Draht-Zuführeinrichtung (1) für eine Gitterschweissanlage, umfassend mindestens eine Schneidvorrichtung (2) nach einem der Ansprüche 1 bis 9.

11. Draht-Zuführeinrichtung (1) nach Anspruch 10, **dadurch gekennzeichnet, dass** die Schneidvorrichtung (2) eine zweite Schnittbüchse (6.2) umfasst, zum Führen eines zweiten abzuschneidenden Drahts.

12. Draht-Zuführeinrichtung (1) nach Anspruch 11, **dadurch gekennzeichnet, dass** die beiden Schnittbüchsen (6.1, 6.2) je mit einem Schneckenrad (19.1, 19.2) zusammenwirken.

13. Draht-Zuführeinrichtung (1) nach Anspruch 12, **dadurch gekennzeichnet, dass** die Draht-Zuführeinrichtung (1) eine Schnecke (11) umfasst, die derart ausgebildet ist, dass die Schnecke (11) die beiden Schnittbüchsen (6.1, 6.2) über die jeweiligen Schneckenräder (19.1, 19.2) antreiben kann.

14. Draht-Zuführeinrichtung nach Anspruch 13, **dadurch gekennzeichnet, dass** die Schnecke (11) einen ersten und einen zweiten Teil (12.1, 12.2) umfasst, wobei der erste Teil (12.1) mit einem ersten der Schneckenräder (19.1) und der zweite Teil (12.2) mit einem zweiten der Schneckenräder (19.2) zusammenwirkt und für die Montage der erste Teil (12.1) relativ zum zweiten Teil (12.2) verdrehbar ist.

## Claims

1. Cutting device (2) for a wire processing machine for the cutting of wire, comprising a movable blade (15.1) for the cutting of the wire, a cutting bush (6.1) with a first opening (7.1) for guidance of the wire that is to be cut, wherein the first opening has a first internal dimension, and with a second opening having a second internal dimension that differs from the first internal dimension, wherein
the first or the second opening can be located in a machining position in which the wire can be sheared by the blade (15.1),
**characterised in that**,
the cutting device (2) has an adjustment mechanism (5) for adjusting the cutting bush (6.1) in order to selectively bring the first opening or the second opening of the cutting bush (6.1) into the machining position.

2. Cutting device (2) according to Claim 1,
**characterised in that**,
the cutting bush (6.1) comprises a third opening, which has a third internal dimension that differs from the first and second internal dimensions.

3. Cutting device (2) according to Claim 1 or 2,
**characterised in that**,
the cutting bush (6.1) can be pivoted about an axis of rotation aligned parallel to the first and second openings, in order to pivot the first or second opening of the cutting bush (6.1) into the machining position.

4. Cutting device (2) according to Claim 3,
**characterised in that**,
the cutting bush (6.1) is designed as a cylinder, and the openings are designed as bores (7.1, 7.2, 7.3) running parallel to a longitudinal axis of the cylinder.

5. Cutting device (2) according to Claim 1 or 2,
**characterised in that**,
the cutting bush (6.1) can be displaced along a linear axis, in order to displace the first or second opening of the cutting bush (6.1) into the machining position.

6. Cutting device (2) according to Claim 3 or 4,
**characterised in that**,
the adjustment mechanism (5) comprises a drive (8), which contains an electric motor, wherein
the cutting bush (6.1) can be pivoted in a stepless manner about the axis of rotation by the electric motor.

7. Cutting device (2) according to Claim 6,
**characterised in that**,
the drive (8) comprises a worm (11), driven by the electric motor, and a worm gear (19.1), wherein
the worm gear (19.1) interacts with the cutting bush (6.1) such that the first or the second opening of the cutting bush (6.1) can be pivoted into the machining position by way of the worm (11) and the worm gear (19.1).

8. Cutting device (2) according to Claim 7,
**characterised in that**,
the drive (8) further comprises a toothed belt (10) for the transmission of forces from the electric motor onto the worm (11).

9. Cutting device (2) according to one of the Claims 1 to 8,
**characterised in that**,
the blade (15.1) can be moved along an adjustment path for purposes of cutting the wire, wherein
the adjustment path is limited in a first and a second direction.

10. Wire feed device (1) for a mesh welding installation, comprising at least one cutting device (2) according to one of the Claims 1 to 9.

11. Wire feed device (1) according to Claim 10,
**characterised in that**,
the cutting device (2) comprises a second cutting bush (6.2) for purposes of guiding a second wire that is to be cut.

12. Wire feed device (1) according to Claim 11, **characterised in that**,
the two cutting bushes (6.1, 6.2) in each case interact with a worm gear (19.1, 19.2).

13. Wire feed device (1) according to Claim 12,
**characterised in that**,
the wire feed device (1) comprises a worm (11), which is designed such that the worm (11) can drive the two cutting bushes (6.1, 6.2) by way of the respective worm gears (19.1, 19.2).

14. Wire feed device according to Claim 13,
**characterised in that**,
the worm (11) comprises a first and a second part (12.1, 12.2), wherein
the first part (12.1) interacts with the first of the worm gears (19.1), and the second part (12.2) interacts with the second of the worm gears (19.2), and for purposes of assembly the first part (12.1) can be rotated relative to the second part (12.2).

## Revendications

1. Dispositif de coupe (2) pour une machine à traiter le fil destinée à découper du fil, comprenant un couteau mobile (15.1) pour découper le fil, un manchon de coupe (6.1) avec une première ouverture (7.1) pour guider le fil à découper, sachant que la première ouverture comporte une première dimension intérieure, et une deuxième ouverture, laquelle comporte une deuxième dimension intérieure différente de la première dimension intérieure, sachant que la première ou la deuxième ouverture peut se trouver dans une position de travail dans laquelle le fil peut être cisaillé par le couteau (15.1), **caractérisé en ce que** le dispositif de coupe (2) comporte un mécanisme de réglage (5) pour régler le manchon de coupe (6.1) et placer facultativement la première ouverture ou la deuxième ouverture du manchon de coupe (6.1) dans la position de travail.

2. Dispositif de coupe (2) selon la revendication 1, **caractérisé en ce que** le manchon de coupe (6.1) comprend une troisième ouverture, laquelle comporte une troisième dimension intérieure différente de la première et de la deuxième dimension intérieure.

3. Dispositif de coupe (2) selon la revendication 1 ou 2, **caractérisé en ce que** le manchon de coupe (6.1) peut pivoter autour d'un axe de rotation orienté parallèlement à la première et à la deuxième ouverture pour pivoter la première ou la deuxième ouverture du manchon de coupe (6.1) dans la position de travail.

4. Dispositif de coupe (2) selon la revendication 3, caractérisé ce que le manchon de coupe (6.1) est constitué comme un cylindre et les ouvertures sont exécutées comme des alésages (7.1, 7.2, 7.3) passant parallèlement à un axe longitudinal du cylindre.

5. Dispositif de coupe (2) selon la revendication 1 ou 2, **caractérisé en ce que** le manchon de coupe (6.1) peut être déplacé le long d'un axe linéaire pour déplacer dans la position de travail la première ou la deuxième ouverture du manchon de coupe (6.1).

6. Dispositif de coupe (2) selon la revendication 3 ou 4, **caractérisé en ce que** le mécanisme de réglage (5) comprend un entraînement (8), qui contient un moteur électrique, sachant que le manchon de coupe (6.1) peut pivoter en continu autour de l'axe de rotation par le moteur électrique.

7. Dispositif de coupe (2) selon la revendication 6, **caractérisé en ce que** l'entraînement (8) comprend une vis sans fin (11) entraînée par un moteur électrique et une roue de vis sans fin (19.1), sachant que la roue de vis sans fin (19.1) coopère avec le manchon de coupe (6.1) de telle manière que la première ou la deuxième ouverture du manchon de coupe (6.1) peut pivoter dans la position de travail par le biais de la vis sans fin (11) et de la roue de vis sans fin (19.1).

8. Dispositif de coupe (2), selon la revendication 7, **caractérisé en ce que** l'entraînement (8) comprend en plus une courroie dentée (10) pour transmettre des forces du moteur électrique à la vis sans fin (11).

9. Dispositif de coupe (2) selon l'une quelconque des revendications 1 à 8, **caractérisé en ce que** le couteau (15.1) pour la découpe du fil peut être déplacé le long d'une course réglable, sachant que la course réglable est limitée dans une première et dans une deuxième direction.

10. Dispositif d'alimentation de fil (1) pour une installation de soudure de treillis comprenant au moins un dispositif de coupe (2) selon l'une quelconque des revendications 1 à 9.

11. Dispositif d'alimentation de fil (1) selon la revendication 10, **caractérisé en ce que** le dispositif de coupe (2) comprend un deuxième manchon de coupe (6.2) pour guider un deuxième fil à cisailler.

12. Dispositif d'alimentation de fil (1) selon la revendication 11, **caractérisé en ce que** les deux manchons de coupe (6.1, 6.2) coopèrent respectivement avec une roue de vis sans fin (19.1, 19.2).

13. Dispositif d'alimentation de fil (1) selon la revendication 12, **caractérisé en ce que** le dispositif d'alimentation de fil (1) comprend une vis sans fin (11), qui est constituée de telle sorte que la vis sans fin (11) peut entraîner les deux manchons de coupe (6.1, 6.2) par le biais des roues de vis sans fin respectives (19.1, 19.2).

14. Dispositif d'alimentation de fil selon la revendication 13, **caractérisé en ce que** la vis sans fin (11) comprend une première et une deuxième partie (12.1, 12.2), sachant que la première partie (12.1) coopère avec une première des roues de vis sans fin (19.1) et la deuxième partie (12.2) avec une deuxième des roues de vis sans fin (19.2) et pour le montage, la première partie (12.1) peut être mise en rotation par rapport à la deuxième partie (12.2).
